# EUROPEAN PATENT APPLICATION

(11) **EP 2 177 773 A1**
(43) Date of publication of application: **21.04.2010**
(21) Application number: 09160165.8
(22) Date of filing: 13.05.2009
(51) Int. Cl.: F16B 12/24

(54) **Joining device for structural furniture elements**

(30) Priority: 17.10.2008 IT MI20081847
(71) Applicant: Manufatti Plastici Traversa S.p.A., 22075 Lurate Caccivio (IT)
(72) Inventor: Ricca, Giovanni, 21047 Saronno (IT)
(74) Representative: Jorio, Paolo

(57) **Abstract**

A joining device for structural furniture elements is provided with a supporting element (2; 52; 102) carried by a first structural element of a piece of furniture and adapted to be engaged by a pin (4; 54; 104) which is couplable to a second structural element of the piece of furniture; and a locking element (3; 53; 103) extending along a first longitudinal axis (B; E; L) and adapted to be coupled to the supporting element (2; 52; 102); the locking element (3; 53; 103) and the supporting element (2; 52; 102) being shaped so as to lock the pin (4; 54; 104) in a given position when coupled to each other.

## Description

The present invention relates to a joining device for structural furniture elements.

The need for simplifying and speeding up the operations of assembling and disassembling furniture is increasingly more felt in the furniture field. In particular, the objective is to simplify the assembly operations to the greatest possible extent in order to facilitate the ever more numerous consumers who assemble furniture purchased from the furniture factory on their own.

It is thus an object of the present invention to provide a joining device for structural furniture elements which is simple from both the functional point of view and the structural point of view, and which is cost-effective at the same time.

In accordance with these objects, the present invention relates to a joining device for structural furniture elements in accordance with claim 1.

The invention is further described in the following non-limiting embodiments, in which:
- figure 1 is an exploded perspective view of a first embodiment of the joining device according to the present invention;
- figure 2 is a top plan view, with parts in section and parts removed for clarity, of the assembled joining device in figure 1;
- figure 3 is an exploded perspective view of a second embodiment of the joining device according to the present invention;
- figure 4 is a top plan view, with parts in section and parts removed for clarity, of the assembled joining device in figure 3;
- figure 5 is an exploded perspective view of a third embodiment of the joining device according to the present invention; and
- figure 6 is a perspective view of a detail of the joining device in figure 5.

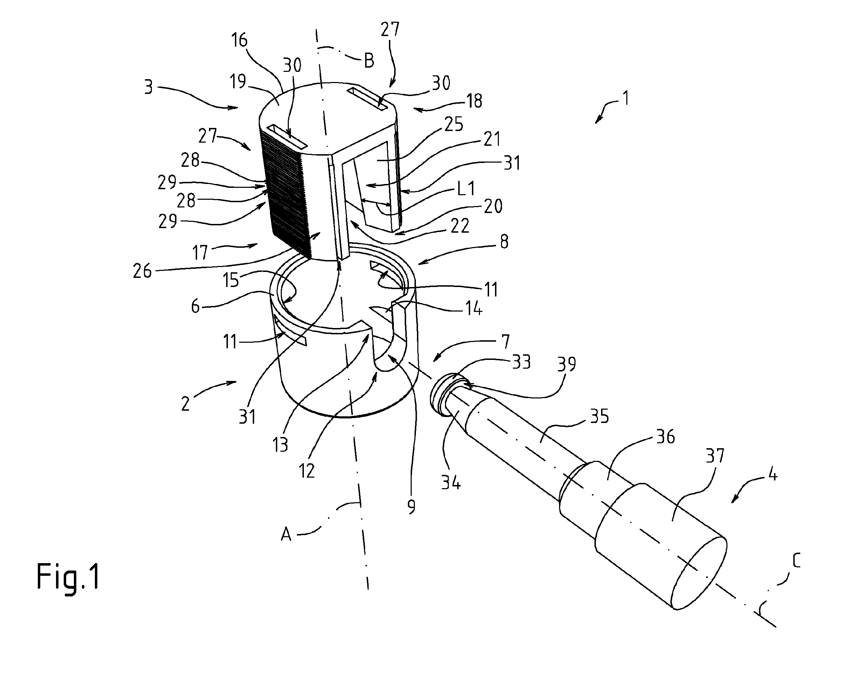

In figure 1, reference numeral 1 indicates a joining device for structural furniture elements.

Device 1 comprises a supporting element 2, a locking element 3 and a pin 4.

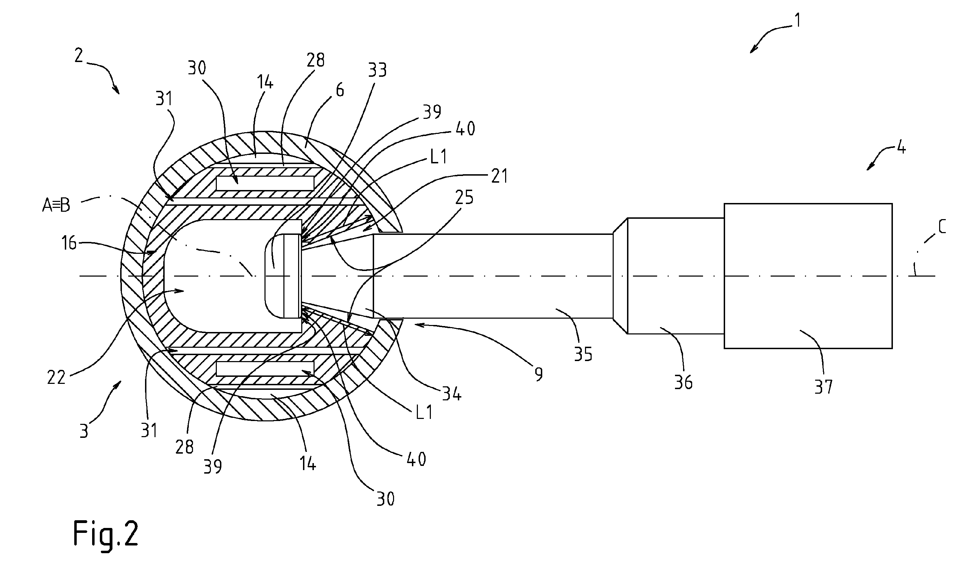

Supporting element 2 is adapted to be arranged in a housing of a first structural element of a piece of furniture (not shown in figures 1 and 2) and comprises a hollow cylindrical body 6 extending along a longitudinal axis A between a first end 7 adapted to be arranged in contact with the housing of the first structural element and a second end 8 opposite to the first end 7 along the axis A.

The cylindrical body 6 is provided with a main slit 9, which extends parallelly to axis A, and with two secondary slits 11, which extend orthogonally to axis A and are arranged on opposite sides with respect to axis A. In particular, the main slit 9 is rounded at a longitudinal end 12 and is open at the opposite longitudinal end 13, at the second end 8 of the cylindrical body 6. The secondary slits 11 are adapted to be engaged by a tool, in this case a screwdriver tip, to allow the supporting element 2 to be removed from the housing of the first structural element of the piece of furniture.

The supporting element 2 further comprises two fins 14 (only one of which may be seen in figure 1), which orthogonally extend to axis A along an inner side face 15 of the cylindrical body 6. The fins 14 are arranged on opposite sides with respect to axis A and, in this non-limitative example described and illustrated herein, are aligned with the secondary slits 11 parallelly to axis A.

The locking element 3 comprises a body 16 extending about a longitudinal axis B between an open end 17 and a closed end 18, which is closed by a wall 19.

The body 16 is provided with a seat 20, which is defined by a mouth 21 and a cavity 22. The mouth 21 and cavity 22 are open at the open end 17 of the body 16.

The mouth 21 is delimited by two sides 25 (only one of which may be seen in figure 1) provided with respective rear contact edges inclined with respect to axis B.

In this example described and illustrated herein, the lateral sides 25 have a width L1 progressively increasing towards the cavity 22 from the open end 17 towards the closed end 18 of the body 16.

The body 16 is provided, along an outer side surface 26, with two toothed portions 27 (only one of which may be seen in figure 1), which are arranged on opposite sides with respect to axis B, substantially on the sides of the mouth 21. In particular, each toothed portion 27 is provided with a plurality of teeth 28, which project from the outer side surface 26, are arranged orthogonally to axis B and form, between one tooth 28 and the other, a plurality of seats 29 selectively engageable by a respective fin 14 of the supporting element 2.

The wall 19 is provided with two upper slits 30 arranged on opposite sides with respect to axis B, substantially close to the toothed portions 27 of the outer side surface 26.

The body 16 is further provided with two slots 31, each of which completely crosses the body 16 in a direction substantially orthogonal to axis B, and is arranged between a respective toothed portion 27 and the seat 20. The slots 31 extend parallelly to axis B over nearly the whole axial length of the body 16 and are open at the open end 17 of the body 16. The presence of the slots 31 confers a sufficient flexibility to the locking element 2 to allow the disengaging by the fins 14 of the respective seats 29 of the toothed portions 27 by means of a simple releasing action carried out by a tip of a tool inserted into the upper slits 30.

The pin 4 substantially extends along an axis C provided with a head 33, a preferably truncated cone-shaped front portion 34, a cylinder-shaped central portion 35 and a cylinder-shaped rear portion 36 having a greater diameter than the central portion 35, and a cylinder-shaped tail portion 37, having a larger diameter than the rear portion 36. The tail portion 37 is adapted to be coupled to a housing of a second structural element of a piece of furniture (not shown in the accompanying figures). The tail portion 37 may be either threaded or may alternatively be coupled to a threaded bushing (not shown in the accompanying figures).

With reference to figures 1 and 2, the head 33 defines an annular face 39, which is adapted in use to cooperate in abutment with a respective coupling face 40 (figure 2) of the cavity 22 defined by the rear contact edges of the lateral sides 25.

It is understood that the shape of the pin 4 could also be different as long as it is provided with a head which defines an annular face 39 adapted to cooperate in abutment with the respective coupling face 40 of the cavity 22.

When coupled, the supporting element 2 and the locking element 3 lock the pin 4 in a given position. In the non-limitative example described and illustrated herein, the pin 4 is locked in a position such that the axis C of the pin 4 is arranged to be orthogonal to the axis A of the supporting element 2.

The coupling of locking element 3 and supporting element 2 for locking the pin 4 includes inserting the pin 4 into the main slit 9, and inserting the locking element 3 into the supporting element 2 so that the annular face 39 of the pin 4 is arranged in abutment against the respective coupling face 40 of the cavity 22 and that the toothed portions 27 cooperate with the respective fins 14.

The insertion of the locking element 3 determines a locking and stressing action on the pin 4, mainly due to the fact that the sides 25 have a width L1 progressively increasing towards the cavity 22 from the open end 17 towards the closed end 18 of the body 16.

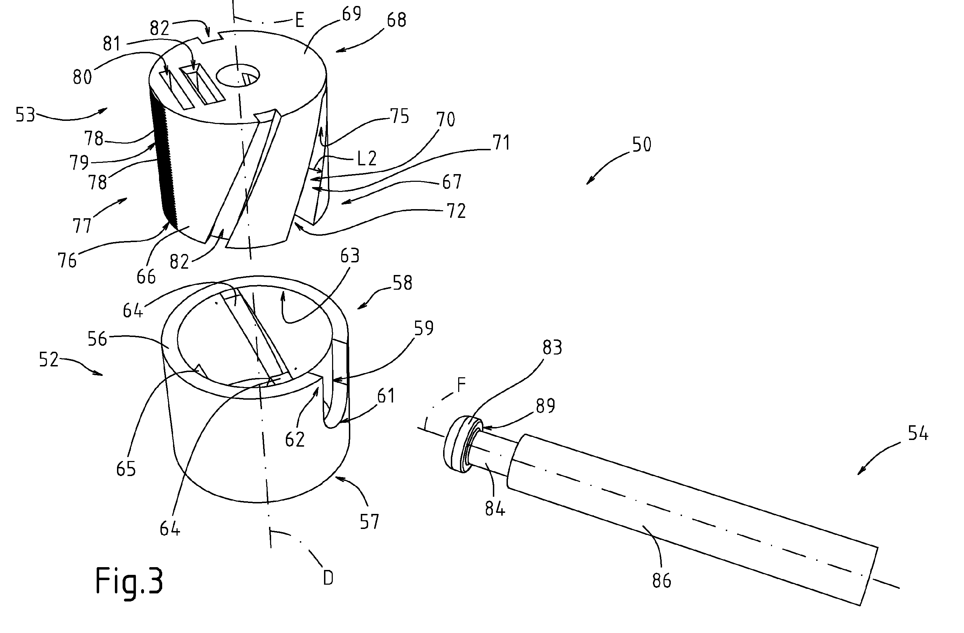

Figure 3 shows a joining device 50 in accordance with a second embodiment.

Joining device 50 comprises a supporting element 52, a locking element 53 and a pin 54.

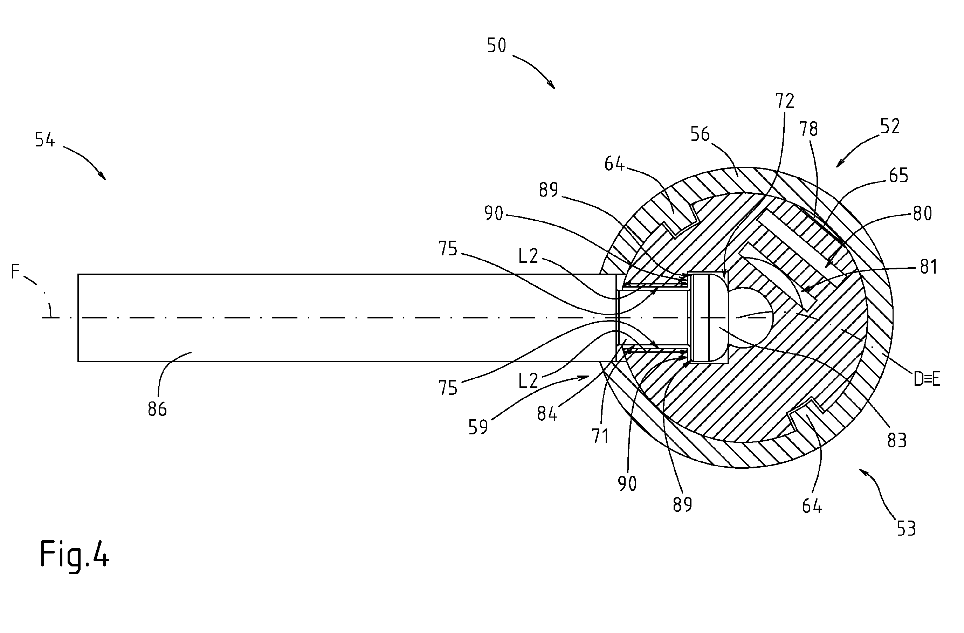

The supporting element 52 is adapted to be arranged in a housing of a first structural element of a piece of furniture (not shown in figures 3 and 4) and comprises a hollow cylindrical body 56 extending along a longitudinal axis D between a first end 57 adapted to be arranged in contact with the housing of the first structural element and a second end 58 opposite to the first end 57 along the axis D.

The cylindrical body 56 is provided with a slit 59, which extends parallelly to axis D. In particular, the slit 59 is rounded at a longitudinal end 61 and is open at the opposite longitudinal end 62, at the second end 58 of the cylindrical body 56.

A not shown variant of the present invention includes the cylindrical body 56 being provided with two secondary slits extending orthogonally to axis D and arranged on opposite sides with respect to axis D, which are adapted to be engaged by a tool, in this case a screwdriver tip, to allow the supporting element 52 to be removed from the housing of the first structural element of the piece of furniture.

Along an inner side face 63, the cylindrical body 56 is provided with at least one projection 64 extending in a direction substantially oblique with respect to axis D. In this non-limitative example described and illustrated herein, there are two projections 64 which are arranged on opposite sides with respect to axis D and extend over the whole length of the inner side face 63. In particular, the projections 64 are slightly curved.

The supporting element 52 further comprises a fin 65, which extends orthogonally to axis D along the inner side face 63 of the cylindrical body 56. The fin 65 is arranged between the two projections 64, substantially on the opposite side of the slit 59 with respect to axis D.

The locking element 53 comprises a body 66 extending about a longitudinal axis E between an open end 67 and a closed end 68, which is closed by a wall 69 perforated in the middle.

The body 66 is provided with a seat 70, which is defined by a mouth 71 and a cavity 72 (more clearly seen in figure 4). The mouth 71 and cavity 72 are open at the open end 67 of the body 66.

The mouth 71 is delimitated by two sides 75 (only one of which may be seen in figure 3) provided with respective rear contact edges inclined with respect to axis E.

In this example described and illustrated herein, the lateral sides 75 have a width L2 progressively increasing towards the cavity 72 from the open end 67 towards the closed end 68 of the body 66. In particular, the sides 75 are slightly curved.

The body 66 is provided, along the outer side surface 76, with a toothed portion 77 defined by a plurality of teeth 78, which project from the outer side surface 76, are arranged orthogonally to axis E and form, between one tooth 28 and the other, a plurality of seats 79 selectively engageable by the respective fin 65 of the supporting element 52.

The wall 69 is provided with an upper proximal slit 80 and an upper distal slit 81, which are arranged side by side and orthogonal to axis E close to the toothed portion 77 of the outer side surface 76. Both the upper proximal slit 80 and the upper distal slit 81 are preferably through and extend parallelly to axis E over the whole length of the body 66.

The upper proximal slit 80 is arranged close to the toothed portion 77, while the upper distal slit 81 is arranged at a greater distance from the toothed portion 77 with respect to the upper proximal slit 80.

The upper proximal slit 80 confers to the locking element 53 a sufficient flexibility to allow the releasing by the fin 65 of the respective seat 79 of the toothed portions 77 by means of a simple releasing action carried out by a tip of a tool inserted into the upper distal slit 81.

Along the outer side surface 76, the body 66 is further provided with at least one groove 82 extending in an oblique direction with respect to axis E. In this non-limitative example described and illustrated herein, there are two grooves 82 which are arranged on opposite sides with respect to axis E and are slightly curved. In particular, the grooves 82 have a substantially complementary shape to that of the respective projections 64.

The pin 54 substantially extends along an axis F and is provided with a head 83, a substantially cylinder-shaped front portion 84, and a cylinder-shaped rear portion 86 having a larger diameter than the front portion 84. The rear portion 86 is adapted to be coupled to a housing of a second structural element of a piece of furniture (not shown in figures 3 and 4). In particular, the rear portion 86 may be threaded or may alternatively be coupled to a threaded bushing (not shown in the accompanying figures).

With reference to figures 3 and 4, the head 83 defines an annular face 89, which is adapted to cooperate in abutment with a respective coupling face 90 of the cavity 72 defined by the rear contact edges of the lateral sides 75.

It is understood that the shape of the pin 54 could also be different as long as it is provided with a head which defines an annular face 89 adapted to cooperate in abutment with the respective coupling face 90 of the cavity 72.

When coupled, the supporting element 52 and locking element 53 lock the pin 54 in a given position. In the non-limitative example described and illustrated herein, the pin 54 is locked in a position such that the axis F of the pin 54 is arranged orthogonally to the axis D of the supporting element 52.

The coupling of the locking elements 53 and supporting element 52 for locking the pin 54 includes inserting the pin 54 into the slit 59, and inserting the locking element 53 into the supporting element 52 so that the annular face 89 of the pin 54 is arranged in abutment against the respective coupling face 90 of the cavity 72, that the toothed portion 77 cooperates with the respective fin 65 and that the projections 64 engage the respective grooves 82.

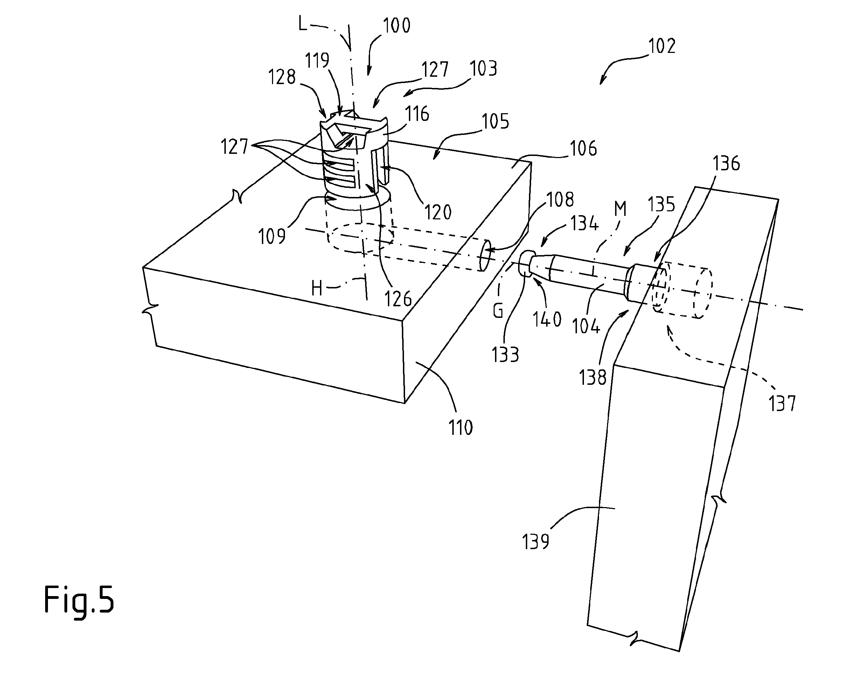

Figure 5 shows a joining device 100 for structural furniture elements in accordance with a third embodiment.

Joining device 100 comprises a supporting element 102, a locking element 103 and a pin 104.

The supporting element 102 comprises a portion 105 of a first structural element 106 of a piece of furniture provided with a hole 108 in which the pin 104 is insertable and a housing 109 in which the locking element 103 is insertable.

The hole 108 extends along an axis G between an outer side 110 of the structural element 106 and the housing 109. The hole 108 substantially has the same section as the pin 104. In the example described and illustrated herein, the section of the hole 108 is circular.

The housing 109 extends along an axis H, orthogonal to the axis G of the hole 108, and has the same section as the locking element 103.

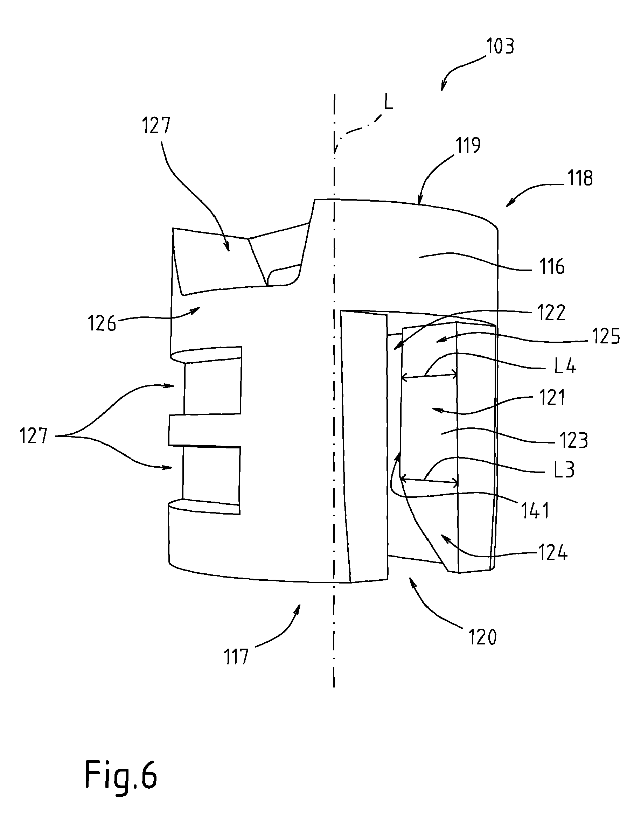

With reference to figure 6, the locking element 103 comprises a substantially cylindrical body 116 extending about a longitudinal axis L between an open end 117 and one end 118 closed by a wall 119.

The body 116 is provided with a seat 120, which is defined by a mouth 121 and a cavity 122. The mouth 121 and cavity 122 are open at the open end 117 of the body 116.

The mouth 121 is delimited by two lateral sides 123 (only one of which may be seen in figure 6) provided with respective rear contact edges inclined with respect to axis L.

In this example described and illustrated herein, the lateral sides 123 comprise a first portion 124 having a width L3 progressively increasing towards the cavity 122 from the open end 117 towards the closed end 118 of the body 116, and a second portion 125 having a width L4 progressively decreasing towards the cavity 122 from the open end 117 towards the closed end 118 of the body 116.

Along an outer side surface 126, the body 116 is provided with lightening recesses 127 adapted to lighten the weight of the body 116 for simplifying the cooling operations when molding the body 116.

With reference to figure 5, the body 116 is further provided with an opening 128 arranged along the wall 119 and optionally extending on the outer side surface 126 and is adapted to be engaged by a tool, in this case a screwdriver tip, to allow the locking element 103 to be removed from the seat 109 of the structural element 106 of the piece of furniture. In particular, the opening 128 and mouth 121 are arranged on opposite sides with respect to axis L.

The body 116 is preferably made of plastic material.

The pin 104 substantially extends along an axis M and is provided with a head 133, a preferably truncated cone-shaped front portion 134, a cylinder-shaped central portion 135 and a cylinder-shaped rear portion 136 having a greater diameter than the central portion 135, and a cylinder-shaped tail portion 137 having a larger diameter than the rear portion 136. The tail portion 137 is adapted to be coupled to a housing 138 of a second structural element 139 of a piece of furniture (not shown in the accompanying figures). The tail portion 137 may be either threaded or may alternatively be coupled to a threaded bushing (not shown in the accompanying figures).

The head 133 defines an annular face 140 which, in use, is adapted to cooperate in abutment with a respective coupling face 141 (figure 6) of the cavity 122 defined by the rear contact edges of the lateral sides 123.

It is understood that the shape of the pin 104 could also be different as long as it is provided with a head which defines an annular face 140 adapted to cooperate in abutment with the respective coupling face 141 (figure 6) of the cavity 122.

When coupled, the supporting element 102 and locking element 103 lock the pin 104 in a given position. In the non-limitative example described and illustrated herein, the pin 104 is locked in a position such that the axis M of the pin 104 is arranged orthogonally to the axis L of the locking element 103.

The coupling of locking element 103 and supporting element 102 for locking the pin 104 occurs upon a movement for inserting the locking element 103 into the housing 109 along a sliding direction substantially parallel to axis L, so that the annular face 140 of the pin 104 is arranged in abutment against the respective coupling face 141 of the cavity 122.

The action of inserting the locking element 103 into the housing 109 along a direction substantially parallel to the axis L of the locking element 103 determines the locking and stressing of the pin 104, mainly due to the fact that the first portion 124 of each side 123 has a width L3 progressively increasing towards the cavity 122 from the open end 117 towards the closed end 118 of the body 116. The second portion 125 of each side 123 having a width L4 progressively decreasing towards the cavity 122 from the open end 117 towards the closed end 118 of the body 116, avoids the locking element 103 from protruding from the seat 109.

Joining device 1, 50, 100 according to the present invention advantageously allows to couple two structural elements of a piece of furniture in a simple, fast, effective manner.

It is finally apparent that changes and variations may be made to the device described herein without departing from the scope of the appended claims.

## Claims

1. A joining device for structural furniture elements comprising:
- a supporting element (2; 52; 102) carried by a first structural element of a piece of furniture and adapted to be engaged by a pin (4; 54; 104) which is couplable to a second structural element of the piece of furniture;
- a locking element (3; 53; 103) extending along a first longitudinal axis (B; E; L) and adapted to be coupled to the supporting element (2; 52; 102);
the locking element (3; 53; 103) and the supporting element (2; 52; 102) being shaped so as to allow to lock the pin (4; 54; 104) in a given position when coupled to each other.

2. A device according to claim 1, wherein the locking element (3; 53; 103) is couplable to the supporting element (2; 52; 102) and locks the pin (4; 54; 104) as a consequence of a movement of the locking element (3; 53; 103) along a sliding direction substantially parallel to the first axis (B; E; L).

3. A device according to claim 1 or 2, wherein the locking element (3; 53; 103) is provided with a seat (20; 70; 120) adapted to accommodate a portion of the pin (4; 54; 104).

4. A device according to the claim 3, wherein the seat (20; 70; 120) is defined by a mouth (21; 71; 121) and a cavity (22; 72; 122).

5. A device according to claim 4, wherein the locking element (3; 53; 103) has an open end (17; 67; 117); the mouth (21; 71; 121) and the cavity (22; 72; 122) being open at said open end (17; 67; 117) of the locking element (3; 53; 103).

6. A device according to claim 4 or 5, **characterized in that** the mouth (21; 71; 121) is delimited by two lateral sides (25; 75; 123) provided with respective rear contact edges, defining a coupling face (40; 90; 141) of the cavity (22; 72; 122) and, in use, cooperating in abutment with an annular face (39; 89; 140) of the pin (4; 54; 104).

7. A device according to claim 6, wherein the rear contact edges are inclined with respect to the first axis (B; E; L).

8. A device according to claim 6 or 7, **characterized in that** the sides (25; 123) extend parallelly to the first axis (B; L).

9. A device according to claim 7, **characterized in that** the sides (75; 123) extend obliquely with respect to the first axis (E).

10. A device according to any one of the claims from 1 to 8, **characterized in that** the supporting element (102) comprises a portion (105) of the first structural element (106) of the piece of furniture provided with a hole (108) in which the pin (104) is insertable and with a housing (109) in which the locking element (103) is insertable.

11. A device according to claim 10, wherein the hole (108) extends along a second axis (G) and the housing (109) extends along a third axis (H); the second axis (G) being orthogonal to the third axis (H).

12. A device according to any one of the claims from 1 to 9, wherein the supporting element (2; 52) comprises a cylindrical body (6; 56), which extends along a fourth longitudinal axis (A; D) and is adapted to be arranged in a housing of the first structural element of a piece of furniture.

13. A device according to claim 12, **characterized in that** the supporting element (2; 52) is provided with a slit (9; 59) adapted to be engaged by the pin (4; 54).

14. A device according to claim 13, **characterized in that** the slit (9; 59) extends parallelly to the fourth axis (A; D).

15. A device according to claim 13 or 14, **characterized in that** the slit (9; 59) has an open longitudinal end (13; 62).

16. A device according to any one of the preceding claims, **characterized in that** the supporting element (2; 52; 102) and the locking element (3; 53; 103) is selectively couplable by snapping coupling means (14, 27; 65, 77).

17. A device according to any one of the preceding claims from 12 to 16, **characterized in that** the locking element (3; 53) is adapted to be inserted into the supporting element (2; 52).
